# EUROPEAN PATENT SPECIFICATION

(11) **EP 4 180 778 B1**
(45) Date of publication and mention of the grant of the patent: **12.06.2024**
(21) Application number: 22206016.2
(22) Date of filing: 08.11.2022
(51) Int. Cl.: G01G 19/34, B29B 7/60

(54) **IMPROVED DOSING DEVICE FOR A FORMING MACHINE FOR DOSING A FIRST GRANULAR MATERIAL TO A SECOND GRANULAR MATERIAL**
VERBESSERTE DOSIERVORRICHTUNG FÜR EINE FORMGEBUNGSMASCHINE ZUM DOSIEREN EINES ERSTEN KÖRNIGEN MATERIALS ZU EINEM ZWEITEN KÖRNIGEN MATERIAL
DISPOSITIF DE DOSAGE AMÉLIORÉ POUR UNE MACHINE DE FORMAGE PERMETTANT DE DOSER UN PREMIER MATÉRIAU GRANULAIRE À UN SECOND MATÉRIAU GRANULAIRE

(30) Priority: 11.11.2021 NL 2029716
(43) Date of publication of application: 17.05.2023
(73) Proprietor: Ferlin Trading B.V., 7701 SK Dedemsvaart (NL)
(72) Inventor: FIX, MATHIJS EGBERT, 7701VR Dedemsvaart (NL); WENNEMARS, HERMAN DIRK JAN, 7701 SK Dedemsvaart (NL); GOODIJK, FRANK WIEBE, 8012 VA Zwolle (NL)
(74) Representative: Mink-Lindenburg, Charlotte Hildegard

(56) References cited:
- EP-A1- 1 289 639
- EP-A1- 1 347 870
- EP-A1- 3 204 737

## Description

The invention relates to a dosing device for a forming machine for dosing a first granular material to a second granular material, comprising:
a) storage means comprising a first storage for storing a first quantity of the first granular material and a first outlet for releasing the first granular material from the storage means, wherein the first storage is provided with a first inlet for supplying the first granular material to the first storage;
b) transport means for transporting the released first granular material to the second granular material;
c) weighing means for determining the weight of the first granular material transported to the second granular material;
d) control means for controlling the dosing device based on the determined weight and a predetermined weight setting;

The predetermined weight setting can be set by means of the control means or be derived from other variables, such as for example a speed signal of an extruder that is cooperating with the dosing device.

The dosing device according to the preamble is known in the prior art.

A first known dosing device is described in the European patent EP1347870. This first known dosing device uses a screw to control the dosing of the first material. The angle of inclination of the first material, which is located between the first outlet of the weighted storage and the screw, changes due to, among other things, vibrations. This creates a distorted image of the actual quantity of the first material dosed. The first known dosing device has, due to its design, proven to be unable to weigh the actual dosed first material in real time, so that the measured and displayed first material do not come across with the actual dosed material.

A second known dosing device is described in the European patent EP1289639. In the second known dosing device the entire dosing device is measured, including the weight of the first storage and the transport means. With a large stock of the first granular material, making the first storage high in weight, and transport means that are large and heavy, weighing small reductions of first material with the second known dosing device is not quite possible.

A third known dosing device is described in the European patent EP3204737. This dosing device uses a vibratory chute for dosing. However, the dosing behavior is not consistent, because the vibratory chute fills itself alternately with a lot of or a little material. The third known dosing device consists of a weighing cell with an electromagnet and an iron block on it. The iron block has some freedom of movement because it is mounted on metal leaf springs. The storage means and dosing chute are also mounted on these leaf springs. By alternately energizing the electromagnet, the iron block starts moving and the machine starts to vibrate. The third known dosing device also is higher in its own weight due to these measures and is therefore unable to accurately weigh smaller quantities of first material.

It is often possible with the known dosing devices to copy a dosing time from, for example, an injection molding machine or to manually set this dosing time at the relevant dosing device. It is also possible that the known dosing devices are controlled by means of a speed signal from, for example, an extruder. The dosing time or the speed signal can be translated by the known dosing device to a weight that needs to be dosed.

The object of the invention is to provide a dosing device according to the preamble in which the above-mentioned disadvantages have been eliminated.

To this end, the dosing device according to the invention is characterized in that the storage means
- comprise a second storage for storing a second quantity of the first granular material, wherein the second quantity is smaller than the first quantity,
- the second storage is arranged for receiving the first granular material from the first storage;
- the second storage comprises a second outlet for releasing the first granular material to the transport means;
- the weighing means are arranged for determining the weight of the first granular material transported to the second granular material by determining the decrease in weight of the second storage and the transport means.

The above-mentioned measures have the effect of improving the ratio between the weight of the part of the dosing device and the storage of first material that is determined by the weighing means in operation of the dosing device with respect to the dosed material. As a result, the weighing means are loaded with a lower weight and the weighing means can achieve a higher measuring accuracy.

The dosing device solves the problem of known dosing devices not weighing accurately enough and there thus being no good traceability of materials. When manufacturing plastic products, often only a few percent of additives are added. For a color additive, a dosing of about 2% is fairly standard. The actual dosing is therefore often in the order of magnitude of a tenth of a gram to a few grams per shot. In a known dosing device, the complete dosing device is placed on a weighing cell of 20 kilograms. Because the range of such a weighing cell is so large (20 kilograms), in many cases this dosing device cannot register the decrease per shot with an accuracy of 0.1 gram (in case of an injection molding machine) or per minute (in case of an extruder). Only after dozens of shots or dozens of minutes a number can be given for the decrease in weight. The traceability of materials will become increasingly more important in the future. It is for example the government's aim to have a circular economy in the field of plastics by 2050, adding increased emphasis on the ability to trace raw materials such that these can be recycled better at a later time. In addition, certain material ratios in a finished product (such as medical products) are desired, whereby a product will be rejected if the dosing deviates.

A product can also be rejected with progressive insight. For example, it can turn out that a plastic part of the interior of a vehicle ends up fragmenting in the event of a collision. The fragments are thereby dangerous to the occupants. Research later shows that from a certain material ratio and up this fragmentation occurs. Because with the inventive dosing device one can keep better track of what the exact material ratio is for each part, the particular vehicles in which the plastic part is applied can be recalled.

In the inventive dosing device, the weight of the weighed stock (second storage) is smaller than the weight of the weighed stock in the known prior art. The result of a small stock is that it needs to be replenished often. This leads to some disadvantages, such as:
- increased risk of emptying the weighed stock
- increased risk of replenishment during a measuring moment
- decrease in capacity of a central vacuum transport system
- additional labor during manual replenishment.

However, these disadvantages are more than compensated using an additional stock (first storage) with the operatable first outlet, such as a pneumatic slide. The advantages of this additional stock (first storage) are:
- the moment of replenishing the small, weighed stock (second storage) can be chosen in such a way that this has no or little effect on measuring moments
- the stock is scalable without any adverse effects
- any possible feed means connected to the first storage have no influence on the accuracy of the dosing device.

In a preferred embodiment of the dosing device according to the invention, the weighing means comprise at least one weighing cell, which measures the weight of the second storage, the transport means and the first granular material located in the transport means. The weight of the second storage is lower than the weight of the first storage which greatly improves the mentioned ratio.

In a further elaboration of the preferred embodiment of the dosing device according to the invention, the transport means comprise an electrically driven timing belt.

The known dosing devices use a dosing screw to move the first granulate. However, the timing belt generally has a smaller drive torque than a dosing screw with a similar transport capacity, which allows a lighter motor to be used to move an equal quantity of first material.

This greatly improves the mentioned ratio and allows small doses to be weighed much more accurately. In addition, the transport of grains with a screw entails friction and risk of clamping. To ensure that a screw does not come to a standstill, it must be able to break/crush a grain. The known dosing device is therefore designed to be relatively heavy and often (heavy) metal parts are used. The mentioned problems with a dosing screw, such as friction and risk of clamping, do not occur when transporting grains with a conveyor belt.

Another disadvantage of a dosing screw or dosing tube is the inherent pulsation effect. In practice, a screw is never filled up to 100 percent when solid materials are being dosed with it. The material that is present gathers as much as possible in the lower part of the screw. This may cause the quantity dosed to be dependent on the angular position of the screw. This leads to variations in the dosed quantity. The pulsation effect effects the dosing accuracy of the systems at low dosing rates. However, when using a timing belt, a pulsation effect does not occur, which benefits the dosing accuracy at low dosing rates. For example, when only 10 grains of granulate need to be dosed for 1 shot, it matters a lot if there are 1 or 2 grains dosed too much or too little.

Finally, the advantage of using a timing belt is that it increases the dosing range, so that a variety of different types of dosing screws or tubes is not necessary.

Preferably the transport means comprise a stepper motor for driving the timing belt.

In an elegant embodiment of the dosing device according to the invention inclined guides are arranged on both sides of the timing belt. The inclined guides prevent bridging of the first material on the timing belt, whereby grains of the first material clamp against each other and create a seal, which prevents other granular grains from passing through. The guides allow the first material to be distributed evenly on the timing belt. The dosing can further be improved when the guides are positioned as such that the part of the timing belt on which the first material is placed becomes narrower. This makes sure that there are less grains per mm located on the timing belt, making the dosing of the first material more accurate.

In a further embodiment of the dosing device according to the invention the second outlet comprises a spout which descends in the direction of movement of the timing belt. Due to the spout, an accumulation at the second outlet is prevented.

In the dosing device according to the invention the second outlet preferably comprises a flexible separation for limiting the outflow. This reduces the outflow opening of the second outlet. Due to the flexible separation, clamping of the first material is prevented while using the dosing device.

In the dosing device according to the invention the number of steps per rotation of the stepper motor is preferably electronically enlarged by means of micro stepping, wherein the number of steps per rotation is chosen as such that the stepper motor causes such a vibration wherein the first granular material remains on the timing belt and distributes itself over the timing belt. These vibrations help to prevent bridging. It turns out that there is less variation in the dosing behavior when applying light vibrations than there is when minimizing or maximizing the vibrations. The light vibrations make sure that the grains are spread out more evenly over the timing belt.

The dosing device according to the invention is preferably provided with a scraping element, which is positioned against the timing belt, wherein the scraping element is arranged for scraping dust on the timing belt.

The invention will further be explained using the following figures, wherein:
Figure 1 shows a schematic view of the dosing device according to the invention;
Figure 2 shows a side view of the preferred embodiment of the dosing device 1 according to Figure 1;
Figure 3 shows an isolated side view of timing belt 10 and the second storage 8.

Similar reference numbers in different figures refer to the same parts.

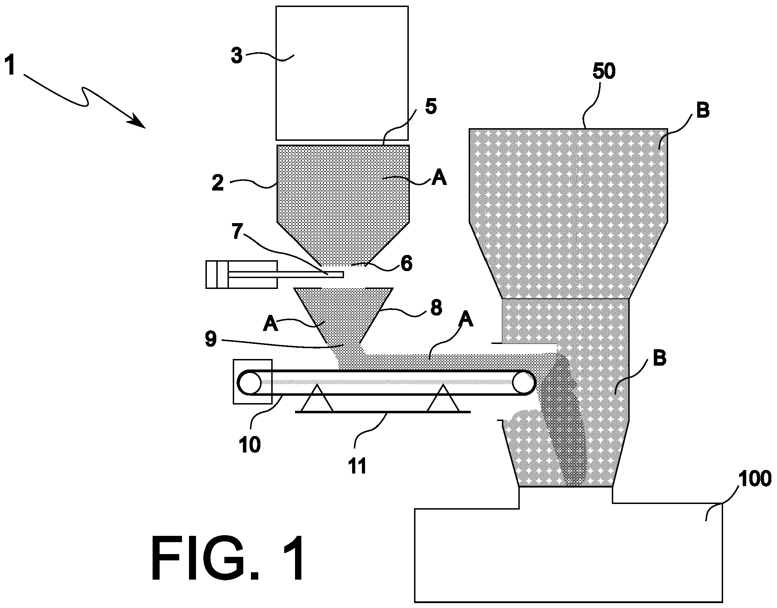

Figure 1 shows a schematic view of the dosing device 1 according to the invention 1. The dosing device 1 is preferably arranged for connection to a further dosing device 50 for dosing a first granular material A to a second granular material B. In practice, the first material is referred to as additive. The second material is referred to as natural.

The dosing device 1 comprises storage means (2; 3) comprising a first storage 2 for storing a first quantity of the first granular material A. The contents of the first storage 2 can be replenished with known replenishing methods, such as a hopper loader or a venturi loader 3. The first storage 2 is thereto provided with a first inlet 5 for supplying the first granular material A to the first storage 2.

For releasing the first granular material A from the first storage 2, under an opening 6 on a, preferably funnel-shaped, bottom of the first storage 2 a, preferably pneumatic, operatable first outlet 7 is placed.

The dosing device 1 comprises a second storage 8 for storing a second quantity of the first granular material A, wherein the second quantity is smaller than the first quantity. The second storage 8 is thereto placed under the operatable outlet 7. The second storage 8 comprises a second outlet 9 for releasing the first granular material A. When the first material A in the second storage 8 threatens to run out, it will be replenished by the first storage 2 by controlling the air cylinder of the operatable outlet 7.

The dosing device 1 is further provided with a timing belt 10, which is placed under the second outlet 9. The timing belt 10 is driven by a stepper motor. When using the dosing device 1 the released first material A falls out of the second storage onto the timing belt 10 and is transported by the timing belt 10 in the direction of the second granular material B.

The dosing device 1 further comprises weighing means 11 for determining the weight of the first granular material A transported to the second granular material B by determining the decrease in the common weight of the second storage 8 and the timing belt and the first granular material A that is located in the second storage 8 and on the timing belt. The weighing means 11 comprise a load cell. By using a timing belt and a small, weighed stock in the second storage 8, the dosing device 1 is very light. A load cell with a low capacity can therefore be used (in practice 3 kilograms). This allows small decreases to be measured much more accurately.

The dosing device 1 is preferably connected to a further dosing device 50, which further dosing device 50 is arranged for dosing the second granular material B. The timing belt 10 is hereby placed as such that the first granular material A is transported to the second granular material B.

The further dosing device 50 is preferably arranged for cooperation with a forming machine 100. In the further dosing device 50, the mixed first and second material A;B will in use of the dosing devices 1;50 be presented to the forming machine 100.

Lastly, the dosing device 1 comprises control means for controlling the operatable first outlet 7 and the timing belt 10, preferably based on the determined weight and a predetermined weight setting or time setting. The control means are also arranged for cooperation with the further dosing device 50. The control means are not shown.
The inventive dosing device 1 solves the problem of the known dosing devices not weighing accurately enough and there thus being no good traceability of materials. The traceability of raw materials is improved with the inventive dosing device 1, because the dosing of the additive is more precisely known. Because a load cell with a much smaller weighing capacity can be used, the weighing of smaller decreases is made possible. The measuring accuracy of the dosing device 1 is after all directly related to the maximum capacity of the load cell. When using a load cell of the same class, such as OIML R 60 C3, as the known dosing devices, a certain decrease in weight can be measured with certainty with the inventive dosing device 1 (with a load cell of a capacity of 3 kilograms), while with the known dosing devices (load cell with capacity 20 kilograms) the decrease has to be 6,7 times bigger to be able to detect the decrease with certainty. Therefore, the inventive dosing device 1 can indicate more often and in a better way how much additive there precisely is in a plastic product.

When manufacturing plastic products often only a few percent of additives are added. A correct dosing is therefore especially important.

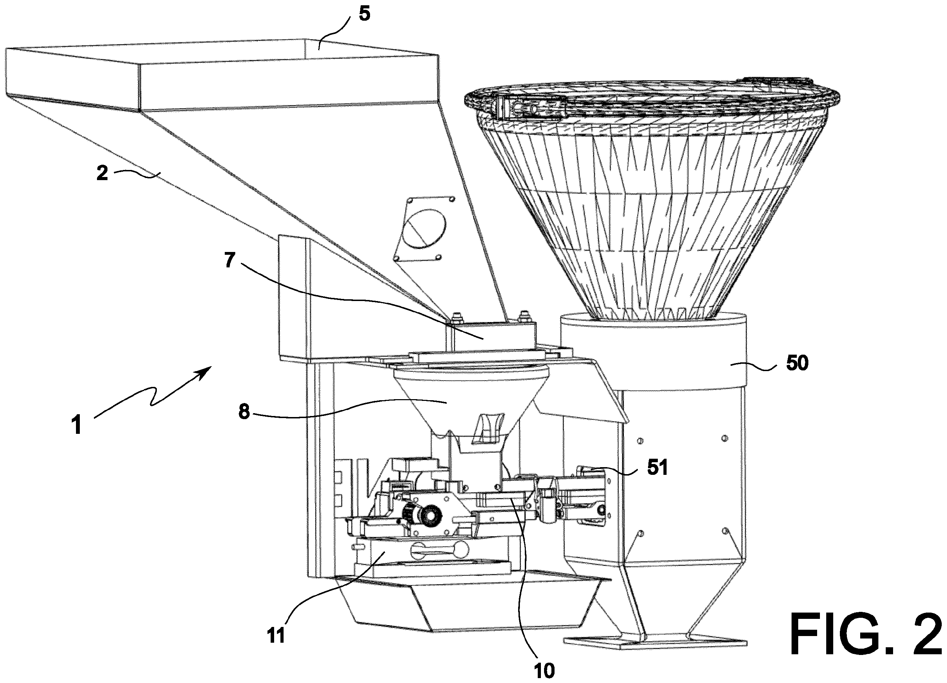

Figure 2 shows a side view of the preferred embodiment of the dosing device 1 according to Figure 1, which is coupled to a further dosing device 50. Both the first storage 2 and the second storage 8 are preferably generally funnel-shaped. The figure shows that the second storage 8 is significantly smaller than the first storage 2. The weighing means 11, which are in this embodiment formed by a loadcell, weigh only the second storage 8, the timing belt and the first material A located in these means. The direction of movement of the timing belt 10 is in the direction of the further dosing device 50. The dosing device 50 is provided with an opening 51 for partially accommodating the timing belt 10 of the dosing device 1, so that in use the first material A that originates from the first and second storage (3;8) falls into the second dosing device 50.

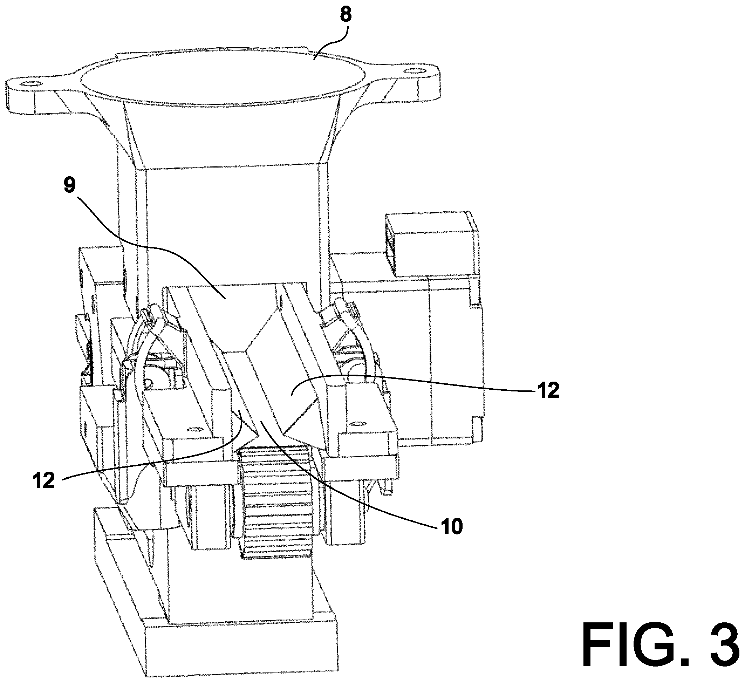

Figure 3 shows an isolated side view of the timing belt 10 and the second storage 8. Applying a timing belt 10 in combination with a stepper motor is not an obvious choice in the technical field of the inventive dosing device. The applicant has done a lot of developmental work to achieve a properly working dosing device. The most challenging is accurately dosing small quantities. It is desirable for this to have as little as possible material divided evenly over the timing belt 10. The less grains fall per millimeter of movement of the timing belt 10, the more arrangeable the dosing is. An obvious choice is to place guides 12 above the timing belt 10 very closely together. This creates a narrow track where only little granular grains can be present. In practice, however, it turns out that with certain additives bridging occurs quickly. The grains between the guides 12 thereby clamp above the belt or timing belt 10. This stops the dosing from time to time, which is very undesirable. Bridging occurs more often in the plastics industry. Granular grains then form a 'bridge' above for example a (too small) outflow opening. The grains clamp to each other and thus create a seal where other granular grains can also not move past.

A part of the solution to have as little material A on the timing belt 10 as possible without bridging occurring is found in using sloped guides 12. The effect of this measure is that a narrow track does form, but that bridging is prevented. Grains of the granular material A can deviate on the sloped guides (12), preventing them from clamping between the guides 12 and the timing belt 10 in an inventive manner.

The second outlet 9 of the second storage 8 preferably comprises a spout, causing the creation of multiple layers of grains on the timing belt 10 to be prevented. This accumulation does decrease slightly over the course of the timing belt because a part of the grains is slowed down due to contact with the sloped sides. Due to the spout of the second outlet 9, the accumulation of grains at the exit of the funnel-shaped storage 8 is partly prevented. The grains are, as it were, waiting on the spout until they are carried away by the timing belt 10.

As an alternative, a flexible separation can be used at the outlet 9 to prevent the accumulation of grains at the outlet 9, which reduces the outflow opening. The optimal length and stiffness of this flap or separation depends on the first material A that needs to be transported. If for example the grains of the first material A are smooth and round, the grains have less of a grip on the timing belt 10 and they push a flap or separation aside with more difficulty.

The use of a stepper motor for driving the timing belt 10 has as an additional effect that the vibrations caused by this motor contribute to the aim of having as little first material A as possible evenly spread out over the timing belt 10. A stepper motor continuously makes small steps, whereby the chosen stepper motor preferably makes 200 steps per rotation. At lower speeds this causes many and relatively hard vibrations to arise because of mass inertia of the motor and the timing belt system 10. By controlling a stepper motor as such, wherein the number of steps per rotation is electronically enlarged by means of micro stepping, the frequency of the vibrations that are caused by the stepper motor can be influenced. With more steps per rotation, the impact of the vibrations is also reduced because the steps are smaller and are fast-tracking.

These vibrations help to prevent bridging. However, with a low number of steps per rotation the vibrations are so intense that the grains on the timing belt 10 move up and off of the timing belt 10. This creates less of a grip of the timing belt 10 on the grains of the first material A and heightens the variations in the dosing behavior. It turns out from practical lessons that light vibrations cause less variations in dosing behavior than as little vibrations as possible. The light vibrations seem to cause the grains to be spread out more evenly over the timing belt 10.

## Claims

1. Dosing device (1) for cooperation with a further dosing device (1) for dosing a first granular material (A) to a second granular material (B), comprising:
a) storage means (2; 3) comprising a first storage (2) for storing a first quantity of the first granular material (A) and a first outlet (7) for releasing the first granular material (A) from the storage means (2;3), wherein the first storage (2) is provided with a first inlet (5) for supplying the first granular material (A) to the first storage (2);
b) transport means (10) for transporting the released first granular material (A) to the second granular material (B);
c) weighing means (11) for determining the weight of the first granular material (A) transported to the second granular material (B);
d) control means for controlling the dosing device (1) based on the determined weight and a predetermined weight setting;
**characterized in that** the storage means (2; 3)
- comprise a second storage (8) for storing a second quantity of the first granular material (A), wherein the second quantity is smaller than the first quantity,
- the second storage (8) is arranged for receiving the first granular material (A) from the first storage (2);
- the second storage (8) comprises a second outlet (9) for releasing the first granular material (A) to the transport means (10);
- the weighing means (11) are arranged for determining the weight of the first granular material (A) transported to the second granular material (B) by determining the decrease in weight of the second storage (8) and the transport means (10).

2. Dosing device (1) according to claim 1, **characterized in that** the weighing means (11) comprise at least one weighing cell (11), which measures the weight of the second storage (8), the transport means (10) and the first granular material (A) located in the transport means (10).

3. Dosing device (1) according to claim 1 or 2, **characterized in that** the transport means (10) comprise an electrically driven timing belt (10).

4. Dosing device (1) according to claim 3, **characterized in that** the transport means (10) comprise a stepper motor for driving the timing belt (10).

5. Dosing device (1) according to claim 3 or 4, **characterized in that** on both sides of the timing belt (10) inclined guides (12) are arranged.

6. Dosing device (1) according to claim 3, 4 or 5, **characterized in that** the second outlet (9) comprises a spout which descends in the direction of movement of the timing belt (10).

7. Dosing device (1) according to claim 3, 4 or 5, **characterized in that** the second outlet (9) comprises a flexible separation for limiting the outflow.

8. Dosing device (1) according to one of the claims 4 to 7, wherein the number of steps per rotation of the stepper motor is electronically enlarged by means of micro stepping, wherein the number of steps per rotation is chosen such that the stepper motor causes such a vibration wherein the first granular material remains on the timing belt (10) and distributes itself over the timing belt (10).

9. Dosing device (1) according to one of the claims 4 to 8, wherein the dosing device (1) is provided with a scraping element, which is positioned against the timing belt (10), wherein the scraping element is arranged for scraping dust on the timing belt (10).

## Patentansprüche

1. Dosiervorrichtung (1) zum Zusammenwirken mit einer weiteren Dosiervorrichtung (1) zum Dosieren eines ersten körnigen Material (A) zu einem zweiten körnigen Material (B), umfassend:
a) Speichermittel (2; 3) umfassend einen ersten Speicher (2) zum Speichern einer ersten Menge des ersten körnigen Material (A) und einem ersten Auslass (7) zum Freigeben des ersten körnigen Material (A) aus den Speichermitteln (2; 3), wobei der erste Speicher (2) mit einem ersten Einlass (5) zum Zuführen des ersten körnigen Material (A) zum ersten Speicher (2) versehen ist;
b) Transportmittel (10) zum Transportieren des freigegebenen ersten körnigen Material (A) zu dem zweiten körnigen Material (B);
c) Wiegemittel (11) zum Bestimmen des Gewichts des ersten körnigen Material (A), das zu dem zweiten körnigen Material (B) transportiert wird;
d) eine Steuereinrichtung zum Steuern der Dosiervorrichtung (1) auf der Grundlage des ermittelten Gewichts und einer vorgegebenen Gewichtseinstellung;
**dadurch gekennzeichnet, dass** die Speichermittel (2; 3)
- einen zweiten Speicher (8) zum Speichern einer zweiten Menge des ersten körnigen Material (A) umfassen, wobei die zweite Menge kleiner ist als die erste Menge,
- der zweite Speicher (8) zur Aufnahme des ersten körnigen Material (A) aus dem ersten Speicher (2) eingerichtet ist;
- der zweite Speicher (8) einen zweiten Auslass (9) zur Abgabe des ersten körnigen Material (A) an die Transportmittel (10) umfasst;
- die Wiegemittel (11) so angeordnet sind, dass sie das Gewicht des ersten körnigen Material (A), das zum zweiten körnigen Material (B) transportiert wird, bestimmen, indem sie die Gewichtsabnahme des zweiten Speichers (8) und der Transportmittel (10) bestimmen.

2. Dosiervorrichtung (1) nach Anspruch 1, **dadurch gekennzeichnet, dass** die Wägemittel (11) mindestens eine Wägezelle (11) umfassen, die das Gewicht des zweiten Speichers (8), der Transportmittel (10) und des in den Transportmitteln (10) befindlichen ersten körnigen Material (A) misst.

3. Dosiervorrichtung (1) nach Anspruch 1 oder 2, **dadurch gekennzeichnet, dass** die Transportmittel (10) einen elektrisch angetriebenen Zahnriemen (10) umfassen.

4. Dosiervorrichtung (1) nach Anspruch 3, **dadurch gekennzeichnet, dass** die Transportmittel (10) einen Schrittmotor zum Antrieb des Zahnriemens (10) umfassen.

5. Dosiervorrichtung (1) nach Anspruch 3 oder 4, **dadurch gekennzeichnet, dass** auf beiden Seiten des Zahnriemens (10) Schrägführungen (12) angeordnet sind.

6. Dosiervorrichtung (1) nach Anspruch 3, 4 oder 5, **dadurch gekennzeichnet, dass** der zweite Auslass (9) eine Tülle aufweist, die in Bewegungsrichtung des Zahnriemens (10) abfällt.

7. Dosiervorrichtung (1) nach Anspruch 3, 4 oder 5, **dadurch gekennzeichnet, dass** der zweite Auslass (9) eine flexible Trennung zur Begrenzung des Ausflusses aufweist.

8. Dosiervorrichtung (1) nach einem der Ansprüche 4 bis 7, wobei die Anzahl der Schritte pro Umdrehung des Schrittmotors mittels Mikroschrittbetrieb elektronisch vergrößert wird, wobei die Schrittzahl pro Umdrehung so gewählt ist, dass der Schrittmotor eine solche Vibration verursacht, dass das erste körnige Material auf dem Zahnriemen (10) verbleibt und sich über den Zahnriemen (10) verteilt.

9. Dosiervorrichtung (1) nach einem der Ansprüche 4 bis 8, wobei die Dosiervorrichtung (1) mit einem Abstreifelement versehen ist, das an dem Zahnriemen (10) anliegt, wobei das Abstreifelement zum Abstreifen von Staub auf dem Zahnriemen (10) angeordnet ist.

## Revendications

1. Dispositif de dosage (1) destiné à coopérer avec un autre dispositif de dosage (1) pour doser un premier matériau granulaire (A) dans un deuxième matériau granulaire (B), comprenant :
a) des moyens de stockage (2 ; 3) comprenant un premier stockage (2) pour stocker une première quantité du premier matériau granulaire (A) et une première sortie (7) pour libérer le premier matériau granulaire (A) des moyens de stockage (2;3), le premier stockage (2) étant pourvu d'une première entrée (5) pour fournir le premier matériau granulaire (A) au premier stockage (2) ;
b) des moyens de transport (10) pour transporter le premier matériau granulaire (A) libéré vers le deuxième matériau granulaire (B) ;
c) des moyens de pesage (11) pour déterminer le poids du premier matériau granulaire (A) transporté vers le deuxième matériau granulaire (B) ;
d) des moyens de commande pour commander le dispositif de dosage (1) en fonction du poids déterminé et d'un réglage de poids prédéterminé ;
**caractérisé en ce que** les moyens de stockage (2 ; 3)
- comprennent un deuxième réservoir (8) pour stocker une deuxième quantité du premier matériau granulaire (A), la deuxième quantité étant inférieure à la première,
- le deuxième réservoir (8) est conçu pour recevoir le premier matériau granulaire (A) du premier réservoir (2) ;
- le deuxième stockage (8) comprend une deuxième sortie (9) pour libérer le premier matériau granulaire (A) vers les moyens de transport (10) ;
- les moyens de pesage (11) sont conçus pour déterminer le poids du premier matériau granulaire (A) transporté vers le deuxième matériau granulaire (B) en déterminant la diminution du poids du deuxième stockage (8) et des moyens de transport (10).

2. Dispositif de dosage (1) selon la revendication 1, **caractérisé en ce que** les moyens de pesée (11) comprennent au moins une cellule de pesée (11) qui mesure le poids du deuxième stockage (8), des moyens de transport (10) et du premier matériau granulaire (A) situé dans les moyens de transport (10).

3. Dispositif de dosage (1) selon la revendication 1 ou 2, **caractérisé en ce que** les moyens de transport (10) comprennent une courroie dentée à entraînement électrique (10).

4. Dispositif de dosage (1) selon la revendication 3, **caractérisé en ce que** les moyens de transport (10) comprennent un moteur pas à pas pour l'entraînement de la courroie dentée (10).

5. Dispositif de dosage (1) selon la revendication 3 ou 4, **caractérisé en ce que** des guides inclinés (12) sont disposés des deux côtés de la courroie dentée (10).

6. Dispositif de dosage (1) selon la revendication 3, 4 ou 5, **caractérisé en ce que** la deuxième sortie (9) comprend un bec qui descend dans la direction du mouvement de la courroie dentée (10).

7. Dispositif de dosage (1) selon la revendication 3, 4 ou 5, **caractérisé en ce que** la deuxième sortie (9) comprend une séparation souple pour limiter le débit.

8. Dispositif de dosage (1) selon l'une des revendications 4 à 7, dans lequel le nombre de pas par rotation du moteur pas à pas est augmenté électroniquement au moyen d'un micropas, le nombre de pas par rotation étant choisi de manière à ce que le moteur pas à pas provoque une vibration telle que le premier matériau granulaire reste sur la courroie dentée (10) et se distribue sur la courroie dentée (10).

9. Dispositif de dosage (1) selon l'une des revendications 4 à 8, dans lequel le dispositif de dosage (1) est pourvu d'un élément de raclage qui est positionné contre la courroie dentée (10), l'élément de raclage étant conçu pour racler la poussière sur la courroie dentée (10).
